# FASCICULE DE BREVET EUROPEEN

(11) **EP 3 864 297 B1**
(45) Date de publication et mention de la délivrance du brevet: **17.05.2023**
(21) Numéro de dépôt: 19813617.8
(22) Date de dépôt: 10.10.2019
(51) Int. Cl.: F04D 25/02, B64C 11/38, F01D 7/00, F04D 29/32, F01D 5/12, F01D 15/12, F01D 25/16, F01D 25/18, F02K 3/068, F02C 7/36, F04D 29/054, F04D 29/056, F04D 29/063

(54) **MODULE DE SOUFFLANTE A PALES A CALAGE VARIABLE**
LÜFTERMODUL MIT SCHAUFELN MIT VARIABLER NEIGUNG
FAN MODULE COMPRISING VARIABLE-PITCH BLADES

(30) Priorité: 10.10.2018 FR 1859405
(43) Date de publication de la demande: 18.08.2021
(73) Titulaire: SAFRAN AIRCRAFT ENGINES, 75015 Paris (FR)
(72) Inventeur: CHARIER, Giles Alain, Marie, 77550 MOISSY-CRAMAYEL (FR); FORMICA, Olivier, 77550 MOISSY-CRAMAYEL (FR); FRANTZ, Caroline, Marie, 77550 MOISSY-CRAMAYEL (FR); TANTOT, Nicolas, Jerôme, Jean, 77550 MOISSY-CRAMAYEL (FR)
(74) Mandataire: Gevers & Orès
(86) Numéro de dépôt international: PCT/FR2019/052418
(87) Numéro de publication internationale: WO 2020/074839

(56) Documents cités:
- EP-A1- 3 205 576
- US-A- 2 850 103
- US-A- 4 772 181

## Description

### 1. Domaine de l'invention

La présente invention concerne le domaine des turbomachines. Elle vise en particulier un module de soufflante à pales à calage variable.

### 2. Etat de la technique

L'état de la technique comporte les documents de brevet EP-A1-3 205 576, GB-A-2 209 371, WO-A2-2010/108576, US-A1-2016/076393, WO-A1-2010/097440, US4772181A et EP-A1-3 179 044.

Une soufflante munie de pales à calage ou à pas variable permet de régler le calage ou l'orientation des pales, et plus précisément l'angle de cale des pales en fonction des paramètres de vol de manière à optimiser le fonctionnement de la soufflante. De manière générale, cette configuration permet d'optimiser le module de soufflante dans lequel une telle soufflante est intégrée. Pour rappel, l'angle de calage d'une pale correspond à l'angle, dans un plan longitudinal perpendiculaire à l'axe de rotation de la pale, entre la corde de la pale et le plan de rotation de la soufflante. Les pales à calage variable peuvent occuper une position dite d'inversion de poussée (connue sous le terme anglais « reverse ») dans laquelle celles-ci permettent de générer une contre poussée de manière à participer au ralentissement de l'aéronef et une position de mise en drapeau dans laquelle, en cas de défaillance ou de panne, celles-ci permettent de limiter leur résistance.

La recherche de la meilleure efficacité propulsive conduit à considérer des soufflantes dont le taux de compression nominal est de plus en plus faible, et par conséquent avec un diamètre externe de plus en plus élevé. De tels choix génèrent un accroissement des contraintes d'opérabilité des aubes de soufflante entre les conditions de fonctionnement au sol et en vol. Un moyen efficace de répondre à ces contraintes a été de considérer des aubes de soufflante avec un calage variable. Par ailleurs, l'entraînement de ce module de soufflante de grand diamètre et faible rapport de pression (généralement inférieur à 1.3) est notamment permis grâce à un réducteur de vitesse qui permet à un arbre de puissance de la turbomachine d'entraîner l'arbre de soufflante et qui permet de réduire la vitesse de rotation de l'arbre de soufflante par rapport à l'arbre de puissance. Typiquement au moins deux paliers sont montés dans un espace annulaire de lubrification, en amont du réducteur de vitesse afin d'une part, de supporter le diamètre de la soufflante et le réducteur de vitesse, et d'autre part de permettre l'intégration d'un système de changement de pas ou de calage des pales de la soufflante. L'enceinte annulaire de lubrification qui s'étend en-dessous du rotor de soufflante permet de lubrifier également le réducteur de vitesse et d'envelopper au moins en partie le système de changement de pas ainsi que les paliers.

Cependant, cet agencement reste encombrant et influe de manière négative sur la masse du module de soufflante ainsi que sur les performances de la turbomachine. En particulier, le système de changement de pas, le réducteur de vitesse et les paliers, tous agencés dans l'enceinte annulaire, génère un encombrement axial et un encombrement radial sous l'axe de pivotement des pales. Une telle augmentation de la masse influe sur la position fréquentielle du mode de déformation en flexion de la soufflante par rapport à la vitesse de rotation maximale de la soufflante dépendant du fonctionnement de la turbomachine. La fréquence de ce mode de déformation en flexion a tendance à se déplacer vers les basses fréquences et se rapprocher de la vitesse maximale de fonctionnement, ce qui conduit à une augmentation des charges et des consommations de jeux dynamiques en présence d'un balourd au niveau de la soufflante. Cela conduit à un impact négatif d'un point de vue masse (nécessaire pour supporter les charges de dimensionnement augmentées) et performances (du fait des consommations de jeux dynamiques augmentées). Lorsqu'un balourd apparait par exemple sur l'arbre de soufflante, les vibrations peuvent également être transmises à l'arbre de puissance via le réducteur.

De même, lors du fonctionnement de la turbomachine, des désalignements interviennent entre les arbres de puissance et de soufflante qui se répercutent dans les organes du réducteur de vitesse. S'agissant d'un réducteur de vitesse à train épicycloïdal (qui comprend un planétaire intérieur (ou solaire), des satellites, un porte-satellites et une couronne (ou planétaire extérieur), les désalignements, notamment dynamiques (qui sont engendrés par des balourds au niveau de la soufflante ou de l'arbre de puissance) surviennent au niveau de l'arbre d'entrée (qui est relié à l'arbre de puissance de la turbomachine), du porte-satellites et de la couronne qui doivent être gérés par la modification de ces organes ou l'ajout de pièce pour modifier leurs comportements.

### 3. Objectif de l'invention

La présente invention a notamment pour objectif de fournir un module de soufflante permettant d'améliorer, de manière simple et efficace, les encombrements radiaux et axiaux de manière à améliorer la masse du module et de la situation dynamique de celui-ci tout en évitant les modifications structurelles importantes.

### 4. Exposé de l'invention

On parvient à cet objectif conformément à l'invention grâce un module de soufflante à pales à calage variable, ledit module de soufflante comprenant :
- un rotor de soufflante portant les pales de la soufflante montées pivotantes chacune suivant un axe de calage,
- un arbre de soufflante s'étendant suivant un axe longitudinal X à l'intérieur du rotor de soufflante et entraînant en rotation le rotor de soufflante,
- un arbre de puissance entraînant en rotation l'arbre de soufflante via un réducteur de vitesse à train épicycloïdal,
- au moins un premier et un deuxième paliers de guidage en rotation du rotor de soufflante par rapport à une structure fixe du module de soufflante et logés dans une enceinte de lubrification,
- un système de changement de pas des pales de la soufflante comportant un mécanisme de liaison relié aux pales de la soufflante et un moyen de commande agissant sur le mécanisme de liaison,
le premier palier étant disposé en amont du réducteur de vitesse et le deuxième palier étant disposé en aval du réducteur de vitesse, le rotor de soufflante étant relié à l'arbre de soufflante par un tourillon annulaire s'étendant au moins sur une partie amont de l'enceinte de lubrification, et le moyen de commande étant situé axialement en amont du tourillon.

Ainsi, cette solution permet d'atteindre l'objectif susmentionné. En particulier, la configuration du tourillon par rapport au rotor de soufflante supportant les pales et de l'enceinte de lubrification en amont de l'arbre de soufflante, et des paliers par rapport au réducteur de vitesse, permet de réduire d'une part, l'encombrement axial et d'autre part, l'encombrement radial dans le rotor de soufflante. Le rotor de soufflante et l'axe de calage des pales peuvent être placés au plus proche des paliers de soufflante ce qui améliore également le comportement dynamique du module de soufflante (réduction de la masse en porte-à-faux sur ces paliers). Les paliers en amont et en aval du réducteur de vitesse facilitent l'intégration du système de changement de pas et notamment du moyen de commande qui a plus de place axialement.

Le module de soufflante peut comprendre également l'une ou plusieurs des caractéristiques suivantes, prises seules ou en combinaison :
- le tourillon annulaire s'étend en-dessous des pieds des pales suivant un axe radial,
- le tourillon annulaire comprend une extrémité amont située axialement au niveau de l'axe de calage des pales et s'étend en aval de l'axe de calage des pales,
- le rotor de soufflante comprend un anneau de support comportant des logements cylindriques radiaux répartis régulièrement autour de l'axe longitudinal et destinés à recevoir chacun un pied de pale, le tourillon étant fixé en aval de l'anneau de support,
- le tourillon est un élément rapporté et fixé sur l'arbre de soufflante,
- le moyen de commande est agencé en amont d'un plan radial dans lequel sont définis les axes de calage des pales,
- le moyen de commande est solidaire en rotation de l'arbre de soufflante,
- le moyen de commande comporte un corps fixe et un corps mobile en translation selon l'axe longitudinal X par rapport audit corps fixe, le corps mobile étant relié au mécanisme de liaison,
- le moyen de commande comprend un corps fixe et un corps mobile qui est agencé autour du corps fixe et qui est coaxial avec l'axe longitudinal,
- le réducteur de vitesse comprend un planétaire couplé à l'arbre de puissance, des satellites et un porte-satellites qui porte les satellites et qui est couplé à l'arbre de soufflante,
- l'arbre de soufflante et le porte satellites sont monoblocs,
- le module de soufflante comprend des moyens d'alimentation du moyen de commande reliés à une source d'alimentation, les moyens d'alimentation comprenant des canalisations qui traversent le réducteur de vitesse et s'étendent au moins en partie à l'intérieur de l'arbre de soufflante,
- le réducteur de vitesse comprend des ouvertures traversantes qui sont ménagées dans le porte-satellites de manière à permettre le passage des canalisations, chaque ouverture traversante étant agencée entre deux satellites adjacents,
- les moyens d'alimentation sont couplés à un palier de transfert d'huile agencé en aval du réducteur de vitesse,
- le premier palier comprend deux paliers à billes ou un palier à rouleaux et un palier à billes,
- le premier palier est un palier à billes,
- le deuxième palier est un palier à rouleaux,
- le réducteur comprend un nombre n de satellites, n étant égal ou supérieur à trois,
- le réducteur de vitesse est logé dans l'enceinte de lubrification,
- les moyens de liaison comprennent des biellettes avec chacune une première extrémité articulée avec une chape d'un anneau solidaire du corps mobile du moyen de commande et une deuxième extrémité articulée avec un maneton du pied de pale,
- le module de soufflante comprend une soufflante amont et une soufflante aval,
- la soufflante amont est montée mobile en rotation autour de l'axe longitudinal et la soufflante aval est montée fixe par rapport à la soufflante amont,
- au moins une soufflante est carénée,
- le palier de transfert d'huile est en communication fluidique avec les canalisations des moyens d'alimentation,
- les premier et deuxième paliers de guidage sont supportés par l'arbre de soufflante en amont et en aval du réducteur de vitesse,
- le premier palier comprend une bague interne liée à l'arbre de soufflante et une bague externe liée à un support de palier amont, et des éléments roulants entre les bague interne et externe,
- le deuxième palier comprend une bague interne liée à un couvercle et une bague externe liée à un support de palier aval, et des éléments roulants entre la bague interne et la bague externe,
- l'axe de calage des pales est perpendiculaire à l'axe longitudinal.

L'invention concerne également une turbomachine comprenant au moins un module de soufflante présentant l'une quelconque des caractéristiques susmentionnées.

### 5. Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
La figure 1 représente une coupe axiale d'une turbomachine à laquelle s'applique l'invention ;
La figure 2 représente schématiquement suivant une coupe axiale une vue de détail d'un module de soufflante d'une turbomachine selon l'invention;
La figure 3 illustre un autre mode de réalisation d'un module de soufflante d'une turbomachine selon l'invention ;
La figure 4 est une vue en coupe axiale d'un autre mode de réalisation d'une turbomachine comprenant un module de soufflante selon l'invention ;
La figure 5 est une vue en perspective et d'un côté amont d'un exemple de réducteur de vitesse monté dans une turbomachine avec un module de soufflante selon l'invention ;
La figure 6 est une vue en perspective et d'un côté aval du réducteur de vitesse illustré sur la figure 5 ; et
La figue 7 représente en perspective un exemple de porte-satellites du réducteur de vitesse illustré sur les figures 5 et 6.

### 6. Description de modes de réalisation de l'invention

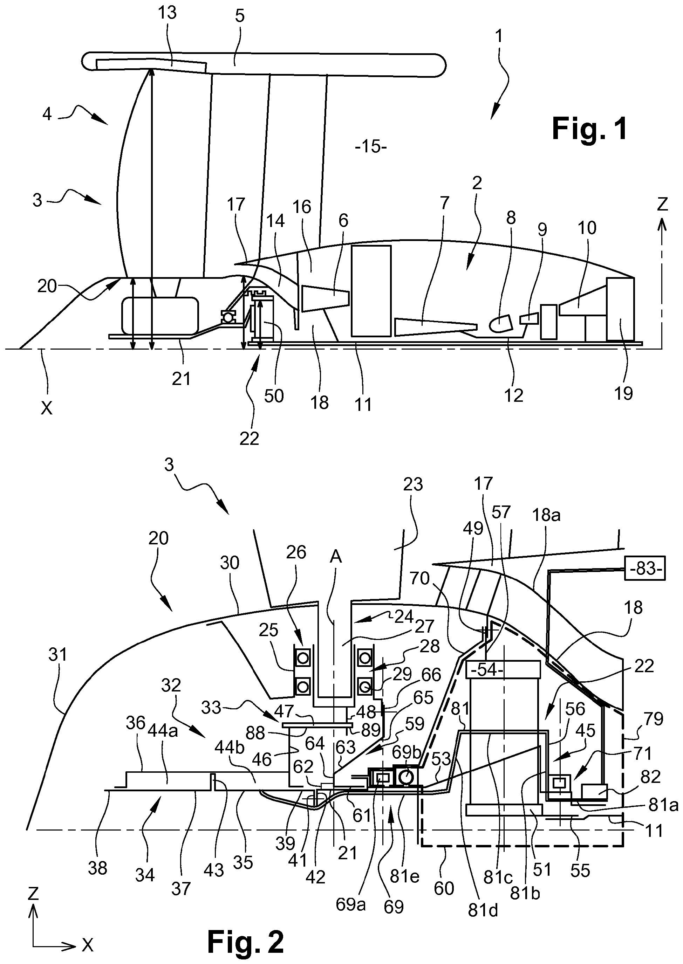

Sur la figure 1 est représentée une turbomachine 1 destinée à être montée sur un aéronef. Cette turbomachine 1 est ici une turbomachine double flux qui s'étend suivant un axe longitudinal X. Bien entendu, l'invention peut s'appliquer à d'autres types de turbomachine comprenant au moins une soufflante comme nous le verrons dans la suite de la description.

De manière générale et dans la suite de la description, le terme « soufflante » est employé pour désigner indifféremment une soufflante ou une hélice, les pales de la soufflante ou de l'hélice pouvant être carénées (par exemple pour les turboréacteurs) ou non carénées (par exemple pour les turbopropulseurs).

La turbomachine 1 comprend un générateur de gaz 2 en amont duquel est montée un module de soufflante 3 avec au moins une soufflante 4. Dans la présente invention, et de manière générale, les termes « amont » et « aval » sont définis par rapport à la circulation des gaz dans la turbomachine qui est sensiblement parallèle à l'axe longitudinal X. De même, les termes « interne », « externe », « au-dessus », « en-dessous », « radial » et « radialement » sont définis par rapport un l'axe radial Z perpendiculaire à l'axe longitudinal X et au regard de l'éloignement par rapport à l'axe longitudinal X. Enfin, les termes « axial » et « axialement » sont définis par rapport à l'axe longitudinal.

La turbomachine 1 double flux comprend une nacelle 5 externe enveloppant le générateur de gaz 2. Le générateur de gaz 2 comprend par exemple, d'amont en aval, un compresseur basse pression 6, un compresseur haute pression 7, une chambre de combustion 8, une turbine haute pression 9 et une turbine basse pression 10. Le compresseur basse pression 6 et la turbine basse pression 10 comprennent chacun un rotor, un arbre basse pression 11 reliant les rotors pour former un corps basse pression. De même, le compresseur haute pression 7 et la turbine haute pression 9 comprennent chacun un rotor, un arbre haute pression 12 reliant les rotors pour former un corps haute pression.

La soufflante 4 est ici carénée par un carter de soufflante 13 solidaire de la nacelle 5. La soufflante 4 comprime un flux d'air entrant dans la turbomachine qui se divise en un flux d'air primaire circulant dans une veine primaire 14 annulaire laquelle traverse le générateur de gaz et un flux d'air secondaire circulant dans une veine secondaire 15 annulaire autour du générateur de gaz. En particulier, la veine primaire 14 et la veine secondaire 15 sont séparées par un carter inter-veine 16 annulaire entourant le générateur de gaz. Le carter inter-veine 16 comprend en amont de celui-ci un bec de séparation 17 qui divise le flux d'air entrant en flux d'air primaire et en flux d'air secondaire. En particulier, la veine primaire 14 est délimitée radialement par un carter interne 18 annulaire et le carter inter-veine 17 annulaire. Quant à la veine secondaire 15, celle-ci est délimitée radialement par le carter inter-veine 16 et la nacelle 5.

La turbomachine 1 comprend en outre une tuyère d'éjection 19 située en aval du générateur de gaz 2 par laquelle sont éjectés le flux d'air primaire et le flux d'air secondaire à l'extérieur de la turbomachine, et en particulier dans l'atmosphère.

Le module de soufflante 3 comprend un rotor de soufflante 20 qui est traversé par une arbre de soufflante 21, annulaire, centré sur l'axe longitudinal X. L'arbre de soufflante 21 entraîne en rotation le rotor de soufflante 20 autour de l'axe longitudinal. L'arbre de soufflante 21 est lui-même entraîné en rotation par un arbre de transmission de puissance d'axe longitudinal X via un mécanisme de transmission de puissance 22. Dans le présent exemple, l'arbre de transmission de puissance est l'arbre basse pression 11. De manière alternative, l'arbre de puissance est un arbre de turbine de puissance alimenté en gaz par le générateur de gaz. Le mécanisme de transmission de puissance 22 permet de réduire la vitesse de rotation de l'arbre de soufflante par rapport à la vitesse de l'arbre basse pression. D'autre part, le mécanisme de transmission de puissance 22 permet l'agencement d'une soufflante avec un diamètre important de manière à augmenter le taux de dilution. Dans le présent exemple, le taux de dilution de la soufflante est supérieur à 10. Préférentiellement, le taux de dilution est compris entre 15 et 20. A cet effet, le diamètre de la soufflante est supérieur à 250 cm.

En référence à la figure 2, le rotor de soufflante 20 porte une série de pales 23 qui sont à calage ou à pas variable. Pour cela, les pales 23 comprennent chacune un pied 24 et les pales 23 s'étendent radialement vers l'extérieur depuis leurs pieds 24. L'extrémité libre des pales est délimitée radialement par le carter de soufflante 13. Le rotor de soufflante 20 comprend plus précisément un anneau de support 25 centré sur l'axe longitudinal X. L'anneau de support 25 comprend une pluralité de logements 26 cylindriques radiaux qui sont régulièrement répartis sur sa périphérie. Les logements 26 reçoivent chacun, de manière pivotante suivant un axe de calage A, un pied 24 de pale. L'axe de calage A est parallèle à l'axe radial. Typiquement, chaque pied 24 de pale se présente sous la forme d'une attache en forme de bulbe lequel est solidaire d'un pivot 27 qui est monté dans un logement 26. Chaque pied 24 pivote dans un logement 26 cylindrique au moyen d'un palier de guidage 28. Ici, il y a deux paliers de guidage dans chaque logement 26. Ces paliers comprennent chacun des roulements et sont montés l'un au-dessus de l'autre suivant l'axe radial Z. En particulier, chaque palier 28 comprend une bague interne et une bague externe entre lesquelles sont agencés des éléments roulants. Chaque bague interne est liée au pied 24 et chaque bague externe est liée est liée à la paroi du logement cylindrique 26. Les éléments roulants de ces deux paliers 28 comprennent ici respectivement des billes 29.

Comme cela est également visible sur la figure 2, les pieds 24 des pales sont recouverts par une enveloppe annulaire 30 externe qui est centrée sur l'axe longitudinal X et qui prolonge vers l'aval un cône d'entrée 31 de la soufflante de manière à assurer une continuité aérodynamique avec le cône 31. Ce dernier guide le flux d'air entrant vers les pales 23 de la soufflante.

Le module de soufflante 3 comporte en outre un système de changement de calage 32 ou de pas des pales de la soufflante 4 permettant de faire varier le calage ou le pas des pales autour de leurs axes de calage A radiaux de sorte qu'elles puissent avoir des positions angulaires différentes selon les conditions de fonctionnement de la turbomachine et les phases de vol concernées. Pour cela, le système de changement de pas 32 comprend des moyens de liaison 33 reliés au pales 23 de la soufflante et un moyen de commande 34 agissant sur les moyens de liaison 33.

Dans le présent exemple, le moyen de commande 34 est solidaire en rotation de l'arbre de soufflante 21. Afin de réduire l'encombrement dans le module de soufflante, le moyen de commande 34 est disposé en amont de l'arbre de soufflante 21. En particulier, le moyen de commande 34 est agencé en amont d'un plan radial dans lequel sont définis les axes de calage des pales de la soufflante. Avantageusement, mais non limitativement, le moyen de commande 34 comprend un actionneur annulaire linéaire d'axe coaxial à l'axe longitudinal X. L'actionneur linéaire comprend un corps fixe 35 solidaire en rotation de l'arbre de soufflante et un corps mobile 36 en translation par rapport au corps fixe 35 le long de l'axe longitudinal X. La masse du système de changement de pas est ainsi mieux répartie (car ayant un porte-à-faux réduit par rapport aux paliers 69a, 69b du rotor de soufflante décrits ultérieurement dans la description), ce qui améliore le comportement dynamique du rotor de soufflante. Le déplacement du corps mobile 36 suivant l'axe longitudinal entraîne le mouvement des moyens de liaison 33, décrit plus loin dans la description, de telle manière que celui-ci engendre le pivotement des pales 23 de la soufflante autour de l'axe de calage A et ainsi le calage des pales 23.

Le corps fixe 35 est cylindrique, d'axe longitudinal X, de section circulaire. Le corps fixe 35 comprend une paroi 37 annulaire avec une première extrémité 38 et une deuxième extrémité 39 qui sont opposées suivant l'axe longitudinal. La paroi 37 est fixée à une extrémité amont 40 de l'arbre de soufflante. A cet effet, la paroi 37 comprend une première bride annulaire 41 s'étendant radialement depuis la deuxième extrémité 39. Avantageusement, la première bride annulaire 41 s'étend à l'intérieur du corps fixe 35. Cette première bride annulaire est fixée sur une deuxième bride annulaire 42 de l'arbre de soufflante 21 pour permettre la fixation du corps fixe sur l'arbre de soufflante.

Le corps fixe 35 comprend également une paroi radiale 43 délimitant ici deux chambres 44a, 44b à volume variable dans le corps mobile 36 et qui sont opposées axialement. La paroi 43 s'étend depuis une face radialement externe de la paroi 37, vers l'extérieur. Le corps mobile 36 est agencé autour du corps fixe 35 et est coaxial avec l'axe longitudinal. Celui-ci se déplace axialement sous l'action d'une commande du moyen de commande 34. Pour cela, le système de changement de pas comprend des moyens d'alimentation fluidique 45 assurant la commande de celui-ci.

Les chambres 44a, 44b sont destinées à recevoir un fluide, par exemple hydraulique sous pression, d'une source d'alimentation fluidique 83 de sorte que le corps mobile 36 occupe au moins deux positions. Ces positions correspondent respectivement à la position d'inversion de poussée connue en anglais sous le terme « reverse » et à la position de mise en drapeau des pales de soufflante. En particulier, dans la position d'inversion de poussée, les pales de la soufflante participent au freinage de l'aéronef, à la manière des inverseurs de poussée usuels. Dans la position de mise en drapeau, les pales 23 sont alors effacées au mieux par rapport à la direction d'avance de l'aéronef, par exemple en cas de panne de la turbomachine, ce qui permet de limiter la traînée. Dans cette dernière position, l'angle de calage des pales est positif, et est généralement de l'ordre de 90°. Dans le présent exemple, lorsque le corps mobile 36 est en amont du moyen de commande (proche de l'arbre de soufflante) alors les pales sont en position de mise en drapeau et lorsque le corps mobile est en aval du moyen de commande 34 (vers l'extrémité 39), alors les pales sont en position d'inversion de poussée.

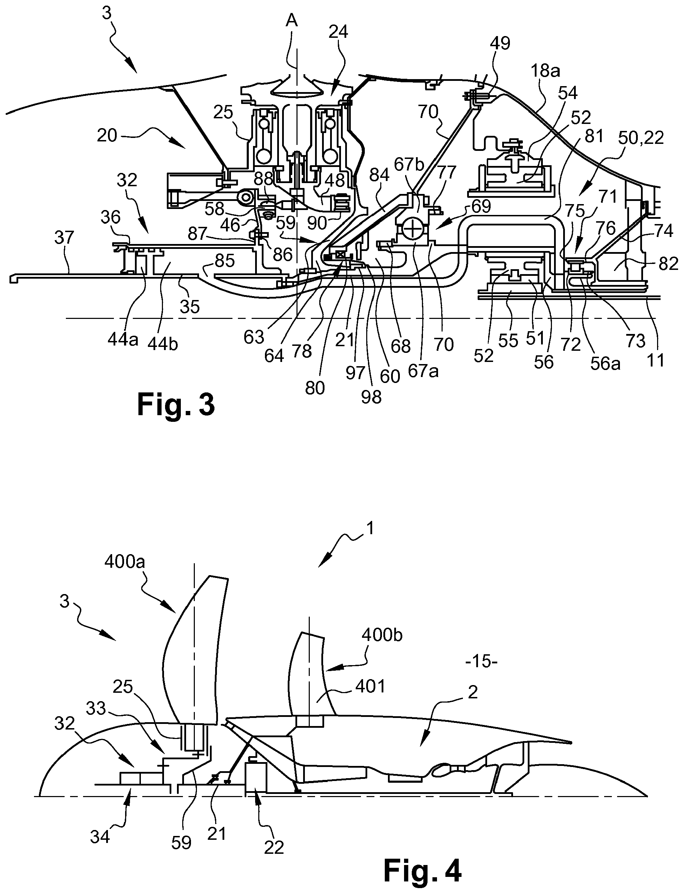

En référence aux figures 2 et 3, le système de changement de pas 32 comprend en outre un anneau de synchronisation 46 qui est entraîné en translation, axialement, par le moyen de commande. L'anneau de synchronisation 46 est solidaire d'une part, au corps mobile 36 et d'autre part, aux moyens de liaison 33. L'anneau de synchronisation 46 permet que le déplacement du corps mobile entraîne le pivotement de toutes les pales. Celui-ci comprend une première bride 86 annulaire radiale qui est fixée sur une deuxième bride 87 annulaire radiale portée par le corps mobile 36. La deuxième bride 87 annulaire radiale est située plus précisément à une extrémité amont du corps mobile 36. L'anneau de synchronisation 46 comprend plusieurs chapes 58 réparties régulièrement et circonférenciellement autour de l'axe longitudinal. Chaque chape 58 coopère avec une biellette 47 des moyens de liaison 33.

Les moyens de liaison 33 comprennent dans cet exemple plusieurs biellettes 47. Les biellettes 47 sont disposées autour de l'actionneur. Il y a autant de biellettes que de pales 23. Chaque biellette 47 comprend une première extrémité 88 et une deuxième extrémité 89 opposées suivant la direction d'allongement de la biellette 47. La direction d'allongement est ici sensiblement parallèle à l'axe longitudinal (en situation d'installation). La première extrémité 88 est articulée dans une chape 58 de l'anneau de synchronisation 46 tandis que la deuxième extrémité 89 est reliée à une fourchette 90 qui est portée par un maneton 48 d'un pied de pale. Chaque maneton 48 est situé à une extrémité radialement intérieure du pied de pale 23. Le maneton 48 permet de démultiplier l'effort nécessaire pour régler le calage de la pale correspondante. De la sorte, le mouvement de translation du corps mobile 36 est transmis à chaque pale.

De préférence, mais non limitativement, l'actionneur est un vérin hydraulique annulaire. Le vérin est constitué de sa tige fixe solidaire de l'arbre de soufflante et d'un cylindre mobile par rapport à la tige. La tige est formée par le corps fixe 35 tandis que le cylindre est formé par le corps mobile 36.

En référence aux figures 2, 3 et 5 à 7, le mécanisme de transmission de puissance 22 comprend un réducteur de vitesse 50. De préférence, mais non limitativement, le réducteur de vitesse est à train d'engrenage épicycloïdal. Ce dernier est logé dans une enceinte de lubrification 60 (représentée schématiquement en pointillé sur la figure 2) dans lequel celui-ci est lubrifié. Typiquement, le réducteur de vitesse 50 comprend un planétaire 51 intérieur (ou solaire), des satellites 52, un porte-satellites 53 et une couronne extérieure 54 (planétaire extérieur). Dans le présent exemple, le planétaire 51 est centré sur l'axe longitudinal X et est couplé en rotation avec l'arbre de puissance (ici l'arbre basse pression 11) suivant l'axe longitudinal X via un arbre planétaire 55. Ce dernier comprend des premiers éléments destinés à coopérer avec des seconds éléments d'accouplement complémentaires portés par le planétaire 51. Les satellites 52 sont portés par le porte-satellites 53 et tournent chacun autour d'un axe sensiblement parallèle à l'axe longitudinal X. Chacun des satellites 52 engrène avec le planétaire 51 et la couronne extérieure 54. Les satellites 52 sont disposés radialement entre le planétaire et la couronne. Dans le présent exemple, il est prévu trois satellites 52. Bien entendu, le réducteur de vitesse 50 peut comprend un nombre de satellites supérieur à trois.

Le porte-satellites 53 est couplé en rotation avec l'arbre de soufflante 21. De la sorte, le planétaire forme l'entrée du réducteur de vitesse tandis que le porte-satellites forme la sortie du réducteur de vitesse. L'arbre de soufflante, l'arbre planétaire et l'arbre de puissance tourne autour de l'axe longitudinal et sont coaxiaux. Dans cet exemple de réalisation, le porte-satellites 53 et l'arbre de soufflante 21 sont monoblocs. Autrement dit, ces derniers sont formés d'un seul tenant ou venues de matière.

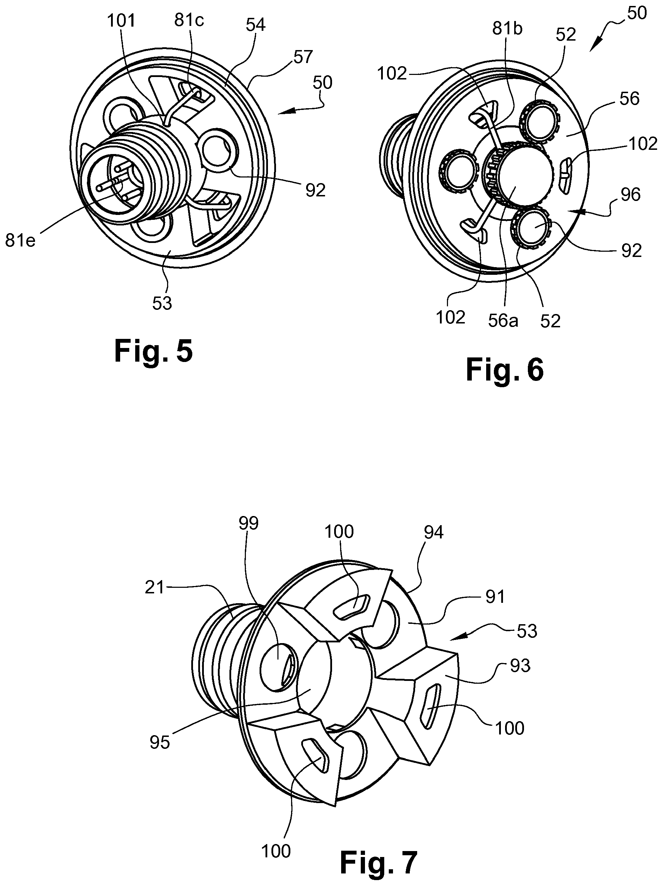

En référence aux figures 5 à 7, le porte-satellites 53 comprend avantageusement, mais non limitativement, un disque 91 défini dans un plan radial (perpendiculaire à l'axe longitudinal X). Le porte-satellites 53 comprend des arbres satellites 92 qui s'étendent en saillie depuis le disque 91 suivant l'axe longitudinal. Chaque satellite 52 est monté sur un arbre de satellite 92 qui est monté dans une ouverture 99 formée dans le disque. Le porte-satellites 53 comprend encore des portées en saillie 93 suivant l'axe longitudinal. Ces portées en saillie 93 s'étendent, circonférentiellement, entre les arbres de satellite 92. Les portées en saillies 93 forment entre elles et circonférentiellement des cavités permettant de recevoir chacune les satellites. Les ouvertures 99 sont localisées dans le fond des cavités formée par une partie de la paroi du disque 91. De plus, les portées en saillie 93 s'étendent radialement entre la périphérie 94 du disque et un trou central 95 centré sur l'axe longitudinal pour loger le planétaire 51. Ceci permet de maintenir les satellites et d'éviter les désalignements.

Le réducteur de vitesse 50 comprend en outre un couvercle 56 qui vient se positionner du côté aval de celui-ci. En particulier, le couvercle 56 est fixé sur le porte-satellites 53 de manière à maintenir les axes des satellites. Le couvercle 56 est ainsi rendu solidaire en rotation du porte-satellites et de l'arbre de soufflante. Le couvercle 56 comprend une paroi 96 se présentant sous la forme d'un disque et un arbre 56a s'étendant axialement depuis la paroi, et en particulier depuis son centre. La paroi du couvercle est en butée contre des surfaces radiales des portées en saillie 93 du porte-satellites 53.

La couronne 54 entoure le porte-satellites 53 et est centré sur l'axe longitudinal. De même, celle-ci est fixe par rapport au porte-satellites 53. En particulier, la couronne 54 est fixée à une structure fixe de la turbomachine via une virole de support 57. Dans le présent exemple, la structure fixe est rigidement fixée au carter interne 18 de la turbomachine. Comme nous pouvons le voir sur la figure 2, le réducteur de vitesse 50 est localisé en aval du bec de séparation 17 du carter inter-veine.

En référence à la figure 2, l'arbre de soufflante 21 est relié au rotor de soufflante au moyen d'un tourillon 59 annulaire. Ce dernier s'étend au moins sur une partie de l'enceinte de lubrification 60 qui est agencée en amont du réducteur de vitesse 50. Le tourillon 59 présente avec l'arbre de soufflante 21 une section axiale en forme générale de tête d'épingle. Une telle forme permet de réduire l'encombrement radial car l'anneau de support 25 des pales peut être placé au plus proche de l'arbre de soufflante 21. Comme cela est illustré, le tourillon 59 s'étend radialement en-dessous des pieds des pales de soufflante. Le tourillon 59 est fixé en amont de l'arbre de soufflante 21 et en aval de l'anneau de support 25 portant les pales de soufflante.

En particulier, le tourillon 59 comprend une jupe 61 annulaire d'axe longitudinal. Cette jupe 61 est montée sur l'arbre de soufflante vers l'extrémité amont 40 de celui-ci, la jupe 61 entourant l'arbre de soufflante. Avantageusement, mais non limitativement, la jupe 61 est maintenue sur l'arbre de soufflante 18 au moyen d'un premier organe de maintien 62 monté en amont de la jupe 61. Ce premier organe de maintien 62 peut être un écrou. En d'autres termes, le tourillon est un élément rapporté et fixé sur l'arbre de soufflante. Le tourillon 59 comprend une portion centrale 63 qui présente une section axiale de forme tronconique. La portion centrale 63 comprend une extrémité amont 64 qui est reliée à une première extrémité de la jupe 61. Cette dernière s'étend à l'intérieur de la portion centrale 63. La portion centrale 63 comprend en outre une extrémité aval 65 qui est reliée à une collerette 66 annulaire qui s'étend suivant l'axe radial. La collerette 66 permet la fixation du tourillon 59 sur le rotor de soufflante. Plus précisément encore, la collerette 66 est fixée sur un côté aval de l'anneau de support 25 des pales de soufflante. La portion centrale 63 recouvre en partie l'enceinte de lubrification 60.

L'extrémité amont 64 du tourillon 59 (en particulier de la portion centrale) est située axialement au niveau de l'axe de calage A des pales de soufflante. Le tourillon 59 s'étend lui-même en aval de l'axe de calage A des pales de soufflante. Plus précisément, nous pouvons voir sur la figure 2 que la portion centrale 63 et la collerette 66 se trouvent en aval de l'axe de calage des pales de soufflante. Nous comprenons que le moyen de commande 34 est situé axialement en amont du tourillon.

L'enceinte de lubrification 60 permet de lubrifier au moins un premier palier de guidage 69 en rotation de l'arbre de soufflante 21. Le premier palier 69 est agencé en amont du réducteur de vitesse 50. Le premier palier 69 est un palier à roulement. Celui-ci comprend une bague interne annulaire et une bague externe annulaire en vis-à-vis. Des éléments roulants sont disposées entre les bagues interne et externe qui définissent des pistes de roulement. La bague interne est portée par l'arbre de soufflante 21. Quant à la bague externe, cette dernière est portée par un support de palier amont 70. Le support de palier amont 70 est fixé rigidement à la structure fixe 49 qui est elle-même fixée au carter interne 18.

En référence à la figure 2, le premier palier 69 est un double palier. En d'autres termes, il y a deux premiers paliers, soit un premier palier amont 69a et un premier palier aval 69b, qui sont situés en amont du réducteur de vitesse 50 pour guider l'arbre de soufflante en rotation par rapport à la structure fixe de la turbomachine. Dans ce cas, les éléments roulants d'un des premiers paliers amont et aval sont des billes et les éléments roulants de l'autre des premiers paliers amont et aval sont des rouleaux. De manière préférée, mais non limitativement, le palier à rouleaux est agencé en amont du palier à billes. De manière alternative, les premiers paliers amont et aval 69a, 69b comprennent deux paliers à billes. Ces paliers permettent de supporter des charges axiales et radiales. Les bagues internes des premiers paliers amont et aval sont montées côte à côte. Typiquement, la bague interne du premier palier aval 69b est bloquée axialement en aval par un épaulement (non représenté). La bague interne du premier palier amont est bloquée axialement en amont par un organe de maintien tel qu'un écrou. La bague externe du premier palier aval est bloquée axialement en amont par un épaulement et en aval par un organe de maintien (un écrou) sur le support de palier amont 70. La bague interne du premier palier amont est bloquée axialement en amont par un élément d'arrêt axial tel qu'une bague (non représentée) et en aval par un épaulement. Préférentiellement, mais non limitativement, le diamètre extérieur du premier palier aval 69b est supérieur au diamètre extérieur du premier palier amont 69a.

Dans un autre mode de réalisation illustré sur la figure 3, il y a un unique premier palier 69 situé en amont du réducteur de vitesse 50. Les éléments roulants de ce palier de guidage sont des billes. Dans ce cas de figure, la bague interne 67a du premier palier 69 est bloquée axialement, d'une part par un organe de maintien axial 68 en amont, et d'autre part par un épaulement 70 agencé en aval de celui-ci. L'organe de maintien axial 68 est ici un écrou. La bague externe 67b est bloquée axialement en amont par un épaulement et en aval par organe de maintien 77 tel qu'un écrou

L'arbre de soufflante 21 est également guidé en rotation au moyen d'un deuxième palier de guidage 71 (illustré sur les figures 2 et 3) situé en aval du réducteur de vitesse 50. Le deuxième palier de guidage est également logé dans l'enceinte de lubrification 60. L'agencement d'un premier palier 69 et d'un deuxième palier 71 respectivement en amont et en aval du réducteur de vitesse 50 permet un gain au niveau de l'encombrement axial de sorte à faciliter l'intégration du moyen de commande 34. Le maintien du réducteur de vitesse est également amélioré avec ces paliers distribués en amont et en aval et les déplacements relatifs de ses différents organes sont limités.

Ce deuxième palier de guidage 71 est un palier à roulements. Le deuxième palier à guidage comprend une bague interne et une bague externe opposées radialement. Ces derniers définissent des pistes de roulements pour des éléments roulants disposés entre celles-ci. La bague interne est portée par le couvercle 56. Plus précisément, la bague interne est logée dans une surface radialement externe de l'arbre 56a du couvercle 56 comme cela est visible sur la figure 3. Un blocage axial de la bague interne est réalisée en amont par un épaulement 72 et en aval par un organe de maintien axial 73 tel qu'un écrou. Quant à la bague externe, celle-ci est portée par un support de palier aval 74 lequel est fixé rigidement à une structure fixe de la turbomachine. La bague externe est bloquée axialement en amont par un élément d'arrêt axial 75 tel qu'une bague et en aval par un épaulement 76 (cf. figure 3). Les éléments roulants de ce deuxième palier de guidage sont avantageusement des rouleaux cylindriques. Ces derniers permettent avantageusement de supporter des charges radiales.

L'enceinte de lubrification 60 permet de lubrifier les premiers et deuxième paliers de guidage 69, 71 de l'arbre de soufflante 21 ainsi que le réducteur de vitesse 50. Avantageusement, le lubrifiant est de l'huile qui occupe l'enceinte de lubrification sous forme de brouillard. L'enceinte de lubrification est délimitée en amont par le support de palier amont 70 et l'arbre de soufflante 21. Des moyens d'étanchéité 78 sont prévus entre l'arbre de soufflante 18 et le support de palier amont 70 de manière à éviter les fuites de lubrifiant à l'extérieur de l'enceinte de lubrification. Les moyens d'étanchéité 78 permettent de délimiter également l'enceinte de lubrification 60. En particulier, les moyens d'étanchéité 78 forment l'extrémité amont de l'enceinte de lubrification 60. Ceux-ci sont par exemple, au moins un joint labyrinthe et/ou au moins un joint radial segmenté (pouvant être un anneau segmenté en carbone). Le support de palier amont 70 peut être complété par des moyens de pressurisation (non représentés) permettant de délivrer un débit d'air comprimé à l'intérieur de l'enceinte de lubrification 60 via les moyens d'étanchéité 78. Ces moyens de pressurisation peuvent comprendre un canal formé dans un capot 84 du support de palier amont 70 qui est prolongé celui-ci en amont. Avantageusement, l'air de pressurisation est prélevé sur un des compresseurs de la turbomachine. Cet agencement permet de limiter les fuites de lubrifiant.

Dans le mode de réalisation de la figure 3, les moyens d'étanchéité 78 sont situés en amont du premier palier de guidage 69. Le capot 84 du support de palier amont supporte et recouvre en partie ce moyen d'étanchéité 78. De même, le tourillon entoure radialement à l'extérieur les moyens d'étanchéité 78.

En aval, l'enceinte de lubrification 60 est délimitée par un carter annulaire 79 fixé au carter interne et par une portion de l'arbre de puissance. Une portion 18a du carter interne 18 délimite également l'enceinte de lubrification 60. La portion 18a du carter interne s'étend axialement entre le support de palier amont 70 et le carter annulaire 79. Ce dernier est situé en aval du support de palier aval 74.

Un déflecteur 80 (visible sur la figure 3) est monté dans l'enceinte de lubrification 60 pour guider le lubrifiant (ici l'huile) d'un organe à l'autre. Ce déflecteur 80 dans le cadre de la figure 3 est agencé axialement entre un écrou 97 de déflecteur 80 en amont (monté sur l'arbre de soufflante 21) et un épaulement 98 de l'arbre de soufflante. Dans le cadre de la figure 2, le déflecteur 80 est monté axialement entre l'écrou de déflecteur et la bague interne du premier palier de guidage 69.

Les moyens d'alimentation fluidique 45 du moyen de commande sont configurés de manière à être reliés à la source d'alimentation fluidique 83 et à alimenter les chambres 44a, 44b du moyen de commande. Sur les figures 2 et 3, les moyens d'alimentation comprennent au moins une canalisation qui traverse le réducteur de vitesse 50. Dans cette exemple de réalisation, plusieurs canalisations 81 (ici trois) permettent d'alimenter le moyen de commande 34. Ces canalisations 81 sont avantageusement des canalisations haute pression. La pression qui circule dans chaque canalisation est de l'ordre de 120 bars. Le fluide haute pression qui circule dans les canalisations 81 est avantageusement une huile. A cet effet, un palier de transfert d'huile 82 qui est connu sous l'acronyme en anglais « OTB » pour Oil transfert Bearing est agencé en aval du réducteur de vitesse 50. Ceci est permis du fait que le moyen de commande 34 est situé en amont de l'arbre de soufflante et que le corps fixe 35 est solidaire de l'arbre de soufflante tournant autour de l'axe longitudinal X. Le palier de transfert d'huile 82 permet comme son nom l'indique de transférer un fluide (huile) issu de la source d'alimentation 83 qui est placée en aval du réducteur de vitesse 50, dans un repère fixe de la turbomachine, vers l'amont du réducteur de vitesse pour alimenter le réducteur de vitesse mais aussi l'actionneur qui est placé dans un repère tournant. De même, placer le palier de transfert d'huile 82 en aval du réducteur de vitesse 50 permet de diminuer son diamètre, de réduire les risques de fuite de celui-ci et de limiter la puissance thermique de celui-ci.

Le palier de transfert d'huile 82 qui est représenté schématiquement sur les figures 2 et 3 comprend une partie annulaire radialement interne (non représentée) qui est montée solidaire en rotation du porte-satellites 53 (du côté aval). Cette première partie est en particulier fixée sur l'arbre du couvercle. Le palier de transfert d'huile comprend également une partie annulaire radialement externe qui est solidarisée à la structure fixe de la turbomachine. Le fluide de lubrification circule entre les parties radialement interne et externe. Le palier de transfert d'huile est couplé à son amont aux canalisations 81 (ici trois) qui vont être acheminés dans le réducteur de vitesse 50 jusqu'au moyen de commande 34. Une telle configuration permet d'une part, de réduire l'encombrement radial du module de soufflante et de gagner en compacité (donc en masse), et d'autre part de réduire le porte-à-faux du centre de gravité du module de soufflante par rapport aux paliers qui le supportent pour améliorer le comportement dynamique du rotor de soufflante.

Pour cela, comme cela est visible sur les figures 5 à 7, le réducteur de vitesse 50 comprend des ouvertures traversantes 100 qui sont traversées par les canalisations 81. Les ouvertures traversantes 100 sont ménagées au niveau des portées en saillie 93 du porte-satellites 53 et sont creusées à l'intérieur de celles-ci. Dans le présent exemple, les ouvertures traversantes 100 s'étendent de part et d'autre axialement des portées en saillie 93 pour déboucher d'un côté amont du disque 91 du réducteur de vitesse. Dans ce cas, l'arbre de soufflante 21 comprend des orifices radiaux 101 qui sont destinés à être traversés chacun par une canalisation 81.

Alternativement, les ouvertures traversantes 100 des portées en saillie 93 débouchent à l'intérieur de l'arbre de soufflante. Dans ce cas, chaque ouverture traversante 100 présente une direction inclinée de sorte qu'elle débouche à l'intérieur de l'arbre de soufflante.

Chaque portée en saillie 93 comprend une seule ouverture traversante. De la sorte, chaque ouverture traversante est agencée entre deux satellites adjacents. De même, le couvercle 56 du porte-satellites 53 comprend des orifices traversants 102 qui traversent la paroi 96 du disque de part et d'autre. Lorsque le couvercle 56 est monté sur le porte-satellites 53, les orifices traversants 102 et les ouvertures traversantes 100 sont alignés. De manière avantageuse, les ouvertures traversantes 100 et les orifices traversants 102 sont allongés suivant une direction circonférentielle. La section radiale des orifices traversants et des ouvertures traversantes peut être oblongue ou rectangulaire. Bien entendu, les ouvertures et orifices traversants peuvent présenter une section radiale de forme circulaire dès lors que ceux-ci permettent le passage des canalisations 81.

De la sorte, chaque canalisation 81 s'étend au moins en partie à l'intérieur de l'arbre de soufflante 21. Comme nous pouvons le voir sur les figures 2, 3 et 5 à 7, les canalisations 81 comprennent chacune, d'aval en amont, une première portion 81a qui s'étend axialement en amont du réducteur de vitesse, une deuxième portion 81b qui s'étend radialement en amont du réducteur de vitesse (en particulier du couvercle 56), une troisième portion 81c qui s'étend sensiblement axialement à l'intérieur du réducteur de vitesse (dans les ouvertures traversantes du porte-satellites et des orifices traversants du couvercle), une quatrième portion 81d qui s'étend sensiblement radialement en amont du réducteur de vitesse et une cinquième portion 81e qui s'étend axialement à l'intérieur de l'arbre de soufflante. Chaque canalisation 81 est également connectée aux chambres 44a, 44b de l'actionneur via un orifice 85 (cf. figure 3) qui débouche dans celles-ci.

La figure 4 représente un autre type de turbomachine à laquelle s'applique l'invention. Les références numériques correspondantes des éléments de la turbomachine décrite précédemment sont conservées dans la suite dans la description. Cette turbomachine comprend un module de soufflante 3 avec une soufflante amont 400a et une soufflante aval 400b. La soufflante amont 400a est agencée sensiblement de manière identique à celle exposée précédemment. C'est-à-dire que la soufflante amont 400a est mobile en rotation à l'aide d'un rotor de soufflante et comprend des pales à calage variable. Le système de changement de pas 32 est installé dans le rotor de soufflante avec le moyen de commande 34 en amont de l'arbre de soufflante 21. Le tourillon 59 est fixé d'une part, à l'aval de l'anneau de support 25 et d'autre part, en amont de l'arbre de soufflante. Nous comprenons que le moyen de commande est situé axialement en amont du tourillon. La différence qui existe avec la soufflante de l'autre turbomachine (cf. figures 1, 2 et 3) est que la soufflante amont 400a n'est pas carénée. La soufflante aval 400b est fixée sur un carter fixe (pouvant être le carter inter-veine 16). La soufflante aval 400b comprend des pales 401 qui sont à calage variable. Un système de changement de pas (non représenté) est prévu pour changer le calage de ces pales. Ces dernières s'étendent radialement à travers la veine secondaire 15 agencée autour du générateur de gaz. Les pales 401 sont agencées axialement en aval des pales mobiles. Les pales de la soufflante aval 400b ne sont pas carénées non plus. Par ailleurs, les pales de la soufflante aval fixe présente une longueur sensiblement suivant l'axe radial qui est inférieure à celle de la soufflante mobile amont.

## Revendications

1. Module de soufflante (3) à pales à calage variable, ledit module de soufflante (3) comprenant :
- un rotor de soufflante (20) portant les pales (23) de la soufflante (4, 400a) montées pivotantes chacune suivant un axe de calage (A),
- un arbre de soufflante (21) s'étendant suivant un axe longitudinal X à l'intérieur du rotor de soufflante (20) et entraînant en rotation le rotor de soufflante (20),
- un arbre de puissance (11) entraînant en rotation l'arbre de soufflante via un réducteur de vitesse (50) à train épicycloïdal,
- au moins un premier et un deuxième paliers de guidage (69, 69a, 69b, 71) en rotation du rotor de soufflante par rapport à une structure du module de soufflante et logés dans une enceinte de lubrification (60), le premier palier (69,69a,69b) étant disposé en amont du réducteur de vitesse et
- un système de changement de pas (32) des pales de la soufflante comportant un mécanisme de liaison (33) reliés aux pales de la soufflante et un moyen de commande (34) agissant sur le mécanisme de liaison (33),
**caractérisé en ce que** le deuxième palier (71) est disposé en aval du réducteur de vitesse (50), le rotor de soufflante (20) étant relié à l'arbre de soufflante (21) par un tourillon (59) annulaire s'étendant au moins sur une partie amont de l'enceinte de lubrification (60) et le moyen de commande (34) étant situé axialement en amont du tourillon (59).

2. Module de soufflante (3) selon la revendication précédente, **caractérisé en ce que** le tourillon (59) annulaire s'étend en-dessous des pieds (24) des pales suivant un axe radial.

3. Module de soufflante (3) selon l'une quelconque des revendications précédentes, **caractérisé en ce que** le tourillon (59) annulaire comprend une extrémité amont (64) située axialement au niveau de l'axe de calage (A) des pales et s'étend en aval de l'axe de calage des pales.

4. Module de soufflante (3) selon l'une quelconque des revendications précédentes, **caractérisé en ce que** le rotor de soufflante (20) comprend un anneau de support (25) comportant des logements (26) cylindriques radiaux répartis régulièrement autour de l'axe longitudinal et destinés à recevoir chacun un pied (24) de pale, le tourillon (59) étant fixé en aval de l'anneau de support (25).

5. Module de soufflante (3) selon l'une quelconque des revendications précédentes, **caractérisé en ce que** le moyen de commande (34) est agencé en amont d'un plan radial dans lequel sont définis les axes de calage (A) des pales.

6. Module de soufflante (3) selon l'une quelconque des revendications précédentes, **caractérisé en ce que** le moyen de commande (34) est solidaire en rotation de l'arbre de soufflante (21).

7. Module de soufflante (3) selon l'une quelconque des revendications précédentes, **caractérisé en ce que** le moyen de commande (34) comporte un corps fixe (35) solidaire de l'arbre de soufflante et un corps mobile (36) en translation selon l'axe longitudinal X par rapport audit corps fixe (35), le corps mobile (36) étant relié au mécanisme de liaison (33).

8. Module de soufflante (3) selon l'une quelconque des revendications précédentes, **caractérisé en ce que** le réducteur de vitesse (50) comprend un planétaire (51) couplé à l'arbre de puissance (11), des satellites (52) et un porte-satellites (53) qui porte les satellites et qui est couplé à l'arbre de soufflante (21).

9. Module de soufflante (3) selon la revendication précédente, **caractérisé en ce que** l'arbre de soufflante (21) et le porte satellites (53) sont monoblocs.

10. Module de soufflante (3) selon l'une quelconque des revendications précédentes, **caractérisé en ce qu'**il comprend des moyens d'alimentation (45) du moyen de commande (34) reliés à une source d'alimentation (83), les moyens d'alimentation (45) comprenant des canalisations (81) qui traversent le réducteur de vitesse (50) et s'étendent au moins en partie à l'intérieur de l'arbre de soufflante (21).

11. Module de soufflante (3) selon la revendication précédente, **caractérisé en ce que** le réducteur de vitesse (50) comprend des ouvertures traversantes (100) qui sont ménagées dans le porte-satellites (53) de manière à permettre le passage des canalisations (81), chaque ouverture traversante (100) étant agencée entre deux satellites adjacents.

12. Module de soufflante (3) selon l'une des revendications 10 à 11, **caractérisé en ce que** les moyens d'alimentation (45) sont couplés à un palier de transfert d'huile (82) agencé en aval du réducteur de vitesse (50).

13. Module de soufflante (3) selon l'une quelconque des revendications précédentes, **caractérisé en ce que** le premier palier (69, 69a, 69b) comprend deux paliers à billes ou un palier à rouleaux et un palier à billes.

14. Module de soufflante (3) selon l'une quelconque des revendications 1 à 12, **caractérisé en ce que** le premier palier (69) est un palier à billes.

15. Module de soufflante (3) selon l'une quelconque des revendications précédentes, **caractérisé en ce que** le deuxième palier (71) comprend un palier à rouleaux.

## Patentansprüche

1. Lüftermodul (3) mit Schaufeln mit variabler Feststellposition, wobei das Lüftermodul (3) umfasst:
- einen Lüfterrotor (20), der die Schaufeln (23) des Lüfters (4, 400a), die jeweils entlang einer Feststellachse (A) schwenkbar montiert sind, trägt,
- eine Lüfterwelle (21), die sich entlang einer Längsachse X im Inneren des Lüfterrotors (20) erstreckt und den Lüfterrotor (20) drehend antreibt,
- eine Kraftwelle (11), die die Lüfterewelle über einen Drehzahlminderer (50) mit Planetengetriebe drehend antreibt,
- mindestens ein erstes und ein zweites Lager (69, 69a, 69b, 71) zur Drehführung des Lüfterrotors in Bezug auf eine Struktur des Lüftermoduls und in einem Schmiergehäuse (60) untergebracht, wobei das erste Lager (69, 69a, 69b) stromaufwärts des Drehzahlminderers angeordnet ist, und
- ein System zum Verändern des Anstellwinkels (32) der Schaufeln des Lüfters, das einen mit den Schaufeln des Lüfters verbundenen Verbindungsmechanismus (33) und ein auf den Verbindungsmechanismus (33) wirkendes Mittel zur Steuerung (34) umfasst,
**dadurch gekennzeichnet, dass** das zweite Lager (71) stromabwärts des Drehzahlminderers (50) angeordnet ist, wobei der Lüfterrotor (20) durch einen ringförmigen Zapfen (59), der sich mindestens an einem stromaufwärtigen Teil des Schmiergehäuses (60) erstreckt, mit der Lüfterwelle (21) verbunden ist, und wobei sich das Mittel zur Steuerung (34) axial stromaufwärts des Zapfens (59) befindet.

2. Lüftermodul (3) nach dem vorstehenden Anspruch, **dadurch gekennzeichnet, dass** sich der ringförmige Zapfen (59) unter den Füßen (24) der Schaufeln entlang einer radialen Achse erstreckt.

3. Lüftermodul (3) nach einem der vorstehenden Ansprüche, **dadurch gekennzeichnet, dass** der ringförmige Zapfen (59) ein stromaufwärtiges Ende (64) umfasst, das sich axial im Bereich der Feststellachse (A) der Schaufeln befindet und sich stromabwärts der Feststellachse der Schaufeln erstreckt.

4. Lüftermodul (3) nach einem der vorstehenden Ansprüche, **dadurch gekennzeichnet, dass** der Lüfterrotor (20) einen Stützring (25) umfasst, der radiale zylindrische Aufnahmen (26) umfasst, die regelmäßig um die Längsachse verteilt und dazu bestimmt sind, jeweils einen Schaufelfuß (24) aufzunehmen, wobei der Zapfen (59) stromabwärts des Stützrings (25) befestigt ist.

5. Lüftermodul (3) nach einem der vorstehenden Ansprüche, **dadurch gekennzeichnet, dass** das Mittel zur Steuerung (34) stromaufwärts einer radialen Ebene, in der die Feststellachsen (A) der Schaufeln definiert sind, eingerichtet ist.

6. Lüftermodul (3) nach einem der vorstehenden Ansprüche, **dadurch gekennzeichnet, dass** das Mittel zur Steuerung (34) drehfest mit der Lüfterwelle (21) verbunden ist.

7. Lüftermodul (3) nach einem der vorstehenden Ansprüche, **dadurch gekennzeichnet, dass** das Mittel zur Steuerung (34) einen fest mit der Lüfterewelle verbundenen festen Körper (35) und einen in Bezug auf den festen Körper (35) entlang der Längsachse X verschiebbar beweglichen Körper (36) umfasst, wobei der bewegliche Körper (36) mit dem Verbindungsmechanismus (33) verbunden ist.

8. Lüftermodul (3) nach einem der vorstehenden Ansprüche, **dadurch gekennzeichnet, dass** der Drehzahlminderer (50) ein mit der Kraftwelle (11) gekoppeltes Planetengetriebe (51), Planetenräder (52) und einen Planetenträger (53) umfasst, der die Planetenräder trägt und der mit der Lüfterwelle (21) gekoppelt ist.

9. Lüftermodul (3) nach dem vorstehenden Anspruch, **dadurch gekennzeichnet, dass** die Lüfterwelle (21) und der Planetenträger (53) einstückig sind.

10. Lüftermodul (3) nach einem der vorstehenden Ansprüche, **dadurch gekennzeichnet, dass** es Mittel zum Versorgen (45) des Mittels zur Steuerung (34) umfasst, die mit einer Versorgungsquelle (83) verbunden sind, wobei die Versorgungsmittel (45) Kanäle (81) umfassen, die durch den Drehzahlminderer (50) hindurchgehen und sich mindestens zum Teil im Inneren der Lüfterwelle (21) erstrecken.

11. Lüftermodul (3) nach dem vorstehenden Anspruch, **dadurch gekennzeichnet, dass** der Drehzahlminderer (50) Durchgangsöffnungen (100) umfasst, die im Planetenträger (53) ausgestaltet sind, um den Durchtritt der Kanäle (81) zu ermöglichen, wobei jede Durchgangsöffnung (100) zwischen zwei aneinandergrenzenden Planetenrädern eingerichtet ist.

12. Lüftermodul (3) nach einem der Ansprüche 10 bis 11, **dadurch gekennzeichnet, dass** die Versorgungsmittel (45) mit einem stromabwärts des Drehzahlminderers (50) eingerichteten Ölübertragungslager (82) gekoppelt sind.

13. Lüftermodul (3) nach einem der vorstehenden Ansprüche, **dadurch gekennzeichnet, dass** das erste Lager (69, 69a, 69b) zwei Kugellager oder ein Rollenlager und ein Kugellager umfasst.

14. Lüftermodul (3) nach einem der Ansprüche 1 bis 12, **dadurch gekennzeichnet, dass** das erste Lager (69) ein Kugellager ist.

15. Lüftermodul (3) nach einem der vorstehenden Ansprüche, **dadurch gekennzeichnet, dass** das zweite Lager (71) ein Rollenlager umfasst.

## Claims

1. A fan module (3) comprising variable-pitch blades, said fan module (3) comprising:
- a fan rotor (20) carrying the blades (23) of the fan (4, 400a) each mounted to pivot about a pitch axis (A),
- a fan shaft (21) extending along a longitudinal axis X inside the fan rotor (20) and driving the fan rotor (20) in rotation,
- a power shaft (11) driving the fan shaft in rotation by means of an epicyclic gear speed reducer (50),
- at least a first and a second bearings (69, 69a, 69b, 71) for guiding the rotation of the fan rotor relative to a structure of the fan module and housed inside a lubrication enclosure (60), the first bearing (69, 69a, 69b) being disposed upstream of the speed reducer, and
- a pitch-varying system (32) for varying the pitch of the blades of the fan comprising a connecting mechanism (33) connected to the blades of the fan and a control means (34) acting on the connecting mechanism (33),
**characterised in that** the second bearing (71) is disposed downstream of the speed reducer (50), the fan rotor (20) being connected to the fan shaft (21) by means of an annular trunnion (59) extending at least along an upstream part of the lubrication enclosure (60) and the control means (34) being located axially upstream of the trunnion (59).

2. The fan module (3) according to the preceding claim, **characterised in that** the annular trunnion (59) extends below the roots (24) of the blades along a radial axis.

3. The fan module (3) according to any one of the preceding claims, **characterised in that** the annular trunnion (59) comprises an upstream end (64) located axially at the level of the pitch axis (A) of the blades and extends downstream of the pitch axis of the blades.

4. The fan module (3) according to any one of the preceding claims, **characterised in that** the fan rotor (20) comprises a support ring (25) comprising radial cylindrical housings (26) distributed regularly around the longitudinal axis and intended to receive each a blade root (24), the trunnion (59) being fixed downstream of the support ring (25).

5. The fan module (3) according to any one of the preceding claims, **characterised in that** the control means (34) is arranged upstream of a radial plane in which the pitch axes (A) of the blades are defined.

6. The fan module (3) according to any of the preceding claims, **characterised in that** the control means (34) is rotationally secured with the fan shaft (21).

7. The fan module (3) according to any one of the preceding claims, **characterised in that** the control means (34) comprises a fixed body (35) secured with the fan shaft and a movable body (36) that is movable in translation along the longitudinal axis X with respect to said fixed body (35), the movable body (36) being connected to the connecting mechanism (33).

8. The fan module (3) according to any one of the preceding claims, **characterised in that** the speed reducer (50) comprises a sun gear (51) coupled to the power shaft (11), planet gears (52) and a planet carrier (53) which carries the planet gears and which is coupled to the fan shaft (21).

9. The fan module (3) according to the preceding claim, **characterised in that** the fan shaft (21) and the planet carrier (53) are integral.

10. The fan module (3) according to any one of the preceding claims, **characterised in that** it comprises supplying means (45) for supplying the control means (34) connected to a power source (83), the supplying means (45) comprising pipes (81) which pass through the speed reducer (50) and extend at least in part inside the fan shaft (21).

11. The fan module (3) according to the preceding claim, **characterised in that** the speed reducer (50) comprises through-openings (100) which are provided in the planet carrier (53) so as to allow the passage of the pipes (81), each through-opening (100) being arranged between two adjacent planet gears.

12. The fan module (3) according to any of claims 10 to 11, **characterised in that** the supplying means (45) are coupled to an oil transfer bearing (82) arranged downstream of the speed reducer (50).

13. The fan module (3) according to any of the preceding claims, **characterised in that** the first bearing (69, 69a, 69b) comprises two ball bearings or one roller bearing and one ball bearing.

14. The fan module (3) according to any one of claims 1 to 12, **characterised in that** the first bearing (69) is a ball bearing.

15. The fan module (3) according to any of the preceding claims, **characterised in that** the second bearing (71) comprises a roller bearing.
